# EUROPEAN PATENT SPECIFICATION

(11) **EP 2 988 283 B1**
(45) Date of publication and mention of the grant of the patent: **18.12.2019**
(21) Application number: 15179886.5
(22) Date of filing: 05.08.2015
(51) Int. Cl.: G08C 17/02

(54) **REMOTE CONTROL DEVICE**
FERNSTEUERUNGSVORRICHTUNG
DISPOSITIF DE COMMANDE À DISTANCE

(30) Priority: 06.08.2014 JP 2014160409
(43) Date of publication of application: 24.02.2016
(73) Proprietor: Mitsubishi Electric Corporation, Chiyoda-ku Tokyo 100-8310 (JP)
(72) Inventor: TAKAHARA, Hideki, Tokyo, 100-8310 (JP); OKAZAKI, Junichi, Tokyo, 100-8310 (JP); NAKASU, Jiro, Tokyo, 100-8310 (JP); HATTA, Hidetoshi, Tokyo, 100-8310 (JP); ISHIKAWA, Miho, Tokyo, 100-8310 (JP)
(74) Representative: Pfenning, Meinig & Partner mbB

(56) References cited:
- EP-A1- 2 119 977
- EP-A1- 2 408 148
- WO-A2-02/07122
- US-A1- 2012 146 918

## Description

### Technical Field

The present invention relates to a remote control device.

### Background Art

A remote control device has a plurality of buttons for controlling an apparatus to be operated. The functions of some of the buttons may not be used at all depending on the user.

There have been remote control devices that allow the user to specify frequently used functions to be displayed on a separate screen (see, e.g., Patent Literature 1).

There has also been a remote control device that displays a hierarchical menu on its display unit, allows the user to select a desired function from the menu, and activates the function selected by the user. The remote control device of this type requires a plurality of operations, causing poor operability when the intended function is located deep inside the menu. For better operability, a remote control device is provided that assigns specific functions to buttons on the remote control device in accordance with a user request (see, e.g., Patent Literature 2).

### Citation List

### Patent Literature

Patent Literature 1: Japanese Unexamined Patent Application Publication No. 2007-181068 ([0081])
Patent Literature 2: Japanese Unexamined Patent Application Publication No. 2000-197162 (Abstract)

See also Publication US2012/0146918 for an example of a remote control on a mobile device, comprising user defined virtual buttons.

### Summary of Invention

### Technical Problem

Before actually activating a function, the user normally checks the current operating state of an apparatus to be controlled (e.g., whether the apparatus is in operation or not, operation mode). Although the techniques disclosed in Patent Literatures 1 and 2 provide measures to improve operability in selecting a function, they do not allow the user to check, on the remote control device, the operating state of the apparatus before actually activating the function. Therefore, to activate an intended function with a button operation, the user needs to actually look at the main body of the apparatus to check the operating state of the apparatus. That is, there is room for improvement in convenience.

The present invention has been made to solve the problems described above. An object of the present invention is to provide a remote control device that allows the user to operate, while checking the operating state of the apparatus, a custom button to which a specific function is assigned in accordance with a user request. Solution to Problem

A remote control device according to the present invention includes a display unit configured to display various screens including at least one main screen indicating an operating state of an air-conditioning apparatus to be operated, a touch panel disposed over the display unit, and a controller configured to cause at least one custom button to be displayed on the main screen along with a display representing an operation mode and whether in operation or not the operating state. The custom button is assigned with one of a plurality of functions of the air-conditioning apparatus in accordance with a user operation.

### Advantageous Effects of Invention

The present invention allows the user to operate the custom button while checking the operating state of the apparatus.

### Brief Description of Drawings

[Fig. 1] Fig. 1 is a control block diagram of a remote control device according to Embodiment 1 of the present invention.
[Fig. 2] Fig. 2 shows display screens on a display unit of the remote control device according to Embodiment 1 of the present invention.
[Fig. 3] Fig. 3 illustrates a transition of a display screen based on a button operation on the remote control device according to Embodiment 1 of the present invention.
[Fig. 4] Fig. 4 illustrates a screen transition for setting a custom button in the remote control device according to Embodiment 1 of the present invention.
[Fig. 5] Fig. 5 shows an exemplary screen that appears after a custom button is set in Fig. 4.
[Fig. 6] Fig. 6 shows another exemplary screen that appears after a custom button is set in Fig. 4.
[Fig. 7] Fig. 7 is a block diagram illustrating a modification of the remote control device according to Embodiment 1 of the present invention.
[Fig. 8A] Fig. 8A shows a first exemplary screen in the modification illustrated in Fig. 7.
[Fig. 8B] Fig. 8B shows a second exemplary screen in the modification illustrated in Fig. 7.
[Fig. 9] Fig. 9 is a control block diagram of a remote control device according to Embodiment 2 of the present invention.
[Fig. 10] Fig. 10 is an external view of the remote control device according to Embodiment 2 of the present invention.
[Fig. 11] Fig. 11 shows exemplary screens in simple mode of the remote control device according to Embodiment 2 of the present invention.
[Fig. 12A] Fig. 12A shows an exemplary screen displayed in the event of an abnormality in simple mode of the remote control device according to Embodiment 2 of the present invention. The screen shown is an exemplary abnormality notification screen displayed in the event of an abnormality in the state of the remote control device 1.
[Fig. 12B] Fig. 12B shows an exemplary screen displayed in the event of an abnormality in simple mode of the remote control device according to Embodiment 2 of the present invention. The screen shown is one displayed in the event of an abnormality in the mechanism of filter cleaning.
[Fig. 12C] Fig. 12C shows an exemplary screen displayed in the event of an abnormality in simple mode of the remote control device according to Embodiment 2 of the present invention. The screen shown is an abnormality notification screen 132 displayed in the event of a failure in the main body.
[Fig. 13] Fig. 13 shows a setting screen for switching the display mode from normal mode to simple mode in the remote control device according to Embodiment 2 of the present invention.
[Fig. 14] Fig. 14 shows a setting screen for switching the display mode from simple mode to normal mode in the remote control device according to Embodiment 2 of the present invention.
[Fig. 15] Fig. 15 illustrates a modified screen transition for switching from simple mode to normal mode in the remote control device according to Embodiment 2 of the present invention.
[Fig. 16] Fig. 16 illustrates a screen transition for timer setting in a remote control device according to Embodiment 3 of the present invention.
[Fig. 17] Fig. 17 shows a setting screen for the timer setting in Fig. 16.
[Fig. 18] Fig. 18 illustrates a modification of the setting screen for timer setting in the remote control device according to Embodiment 3 of the present invention.
[Fig. 19] Fig. 19 shows a modified pop-up displayed on completion of timer setting in the remote control device according to Embodiment 3 of the present invention.

### Description of Embodiments

A remote control device according to the present invention will be described below. The remote control device to be described is a device used to operate an air-conditioning apparatus.

### Embodiment 1

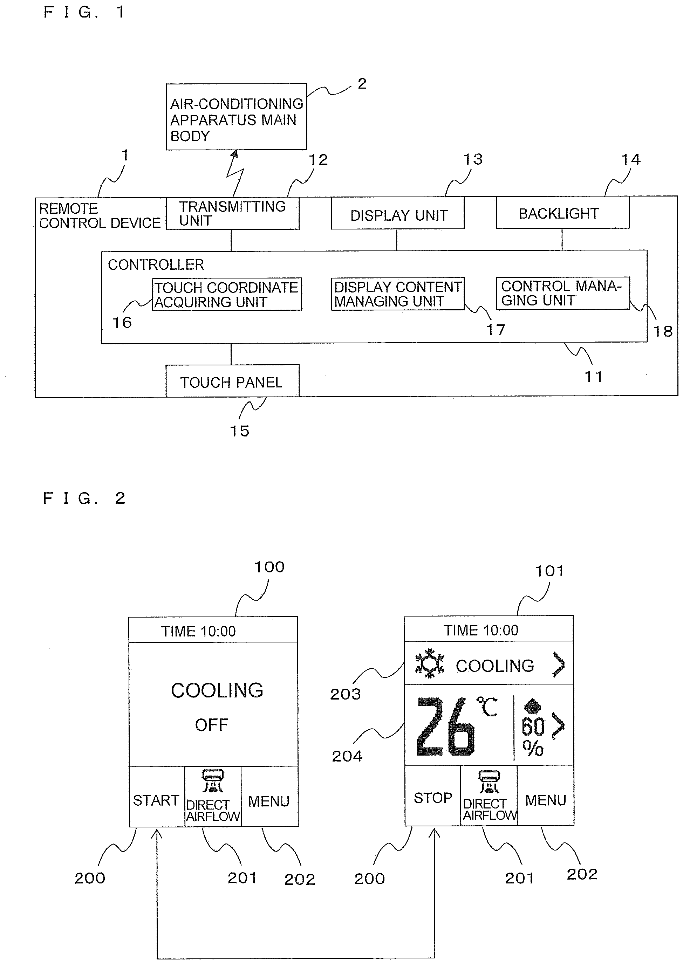

Fig. 1 is a control block diagram of a remote control device according to Embodiment 1 of the present invention. In Fig. 1 and the other drawings, components identified by the same reference signs are the same or corresponding components, which are common throughout the description. Note that components mentioned throughout the description are merely examples, and are not limited to the description.

A remote control device 1 communicates with an air-conditioning apparatus main body 2 to transmit control commands to, and receive operation information from, the air-conditioning apparatus main body 2. The remote control device 1 includes a transmitting unit 12 that transmits a signal for changing the operation information to the air-conditioning apparatus main body 2, a display unit 13 that displays a setting status of the air-conditioning apparatus main body 2, and a backlight 14 that illuminates the display unit 13. The remote control device 1 further includes a touch panel 15 and a controller 11. The touch panel 15 is disposed on the front or back side of the display unit 13 to overlap the display region of the display unit 13. The touch panel 15 is configured to receive an operation in a detection region and output the corresponding detection coordinates.

The controller 11 includes a touch coordinate acquiring unit 16, a display content managing unit 17, and a control managing unit 18. For example, the controller 11 is formed by a microcomputer and includes a CPU, a RAM, and a ROM. The ROM stores control programs. The CPU and the control programs functionally form the touch coordinate acquiring unit 16, the display content managing unit 17, and the control managing unit 18.

The touch coordinate acquiring unit 16 acquires the coordinates of a point at which the touch panel 15 is touched. The display content managing unit 17 manages images displayed on the display unit 13, display positions (coordinates) of the images, and types of the images (whether the image is a simple image, a button, etc.). On the basis of the coordinates acquired by the touch coordinate acquiring unit 16 and the information managed by the display content managing unit 17, the control managing unit 18 identifies the type of an image in a region touched by the user, causes the transmitting unit 12 to transmit a signal indicating a process corresponding to the type of the image to the air-conditioning apparatus main body 2, and sends a request to the display content managing unit 17 to update the displayed content on the display unit 13.

Fig. 2 shows display screens on the display unit of the remote control device according to Embodiment 1 of the present invention.

A screen 100 is a screen displayed while the air-conditioning apparatus main body 2 is not in operation. The current time and the operating state of the air-conditioning apparatus main body 2 (operation mode: cooling, OFF) are displayed on the screen 100. An operation button 200, a menu button 202, and a custom button 201 are also displayed on the screen 100.

The operation button 200 is a button used to start or stop the operation of the air-conditioning apparatus main body 2. Since the air-conditioning apparatus main body 2 is not in operation in Fig. 2, "START" is displayed on the operation button 200 on the screen 100. The menu button 202 is a button used to cause the screen to transition to a menu screen for setting of, or changing the setting of, various functions of the air-conditioning apparatus main body 2 or the remote control device 1. The custom button 201 is a button to which the user can assign a desired function selected from a plurality of functions of the air-conditioning apparatus main body 2.

A screen 101 is a screen displayed on the display unit 13 while the air-conditioning apparatus main body 2 is in operation. The current time and the state of the air-conditioning apparatus main body 2 (operation mode: cooling, set temperature: 26°C, set humidity: 60%) are displayed on the screen 101. The buttons 200 to 202, which are the same as those on the screen 100, are also displayed on the screen 101. Since the air-conditioning apparatus main body 2 is in operation, "STOP" is displayed on the operation button 200 on the screen 101. Additionally, an operation mode button 203 and a temperature/humidity button 204 are displayed on the screen 101. The operation mode button 203 indicates the current operation mode, and is used to cause the screen to transition to an operation mode change screen for changing the setting of the operation mode. The temperature/humidity button 204 indicates a set temperature and a set humidity, and is used to cause the screen to transition to a temperature/humidity setting screen for changing the set temperature or the set humidity.

An operation will be described with reference to Figs. 1 and 2. While the air-conditioning apparatus main body 2 is not in operation, the screen 100 is displayed on the display unit 13 in Fig. 2. When the user wants to start the air-conditioning apparatus main body 2, the user touches the operation button 200 on the display unit 13. The touch panel 15 is disposed on the front or back side of the display unit 13 such that it can acquire touch information in at least a range covering a button area of the entire region of the display unit 13. The touch panel 15 can thus detect a touch operation of the user.

When the touch panel 15 detects the touch by the user, the touch coordinate acquiring unit 16 acquires coordinate information of the point at which the user has touched. The display content managing unit 17 uses the coordinate information acquired by the touch coordinate acquiring unit 16 to identify the type of an image in the touched region. Fig. 2 shows that the operation button 200 has been touched in this example.

Next, the control managing unit 18 determines the subsequent operation by using information about the image type identified by the display content managing unit 17. That is, the control managing unit 18 determines the subsequent operation by taking into account not only information about the image type identified by the display content managing unit 17, but also information about the current operating state (cooling mode, not in operation, etc.).

In this example, the operation button 200 is touched while the air-conditioning apparatus main body 2 is not in operation in cooling mode. Therefore, the control managing unit 18 sends a request to the display content managing unit 17 to display the screen 101 indicating that the air-conditioning apparatus main body 2 is in operation in cooling mode. The control managing unit 18 also sends a request to the transmitting unit 12 to transmit, to the air-conditioning apparatus main body 2, a signal for causing the air-conditioning apparatus main body 2 to operate in cooling mode. In accordance with the request from the control managing unit 18, the display content managing unit 17 displays the screen 101 on the display unit 13. Also, in accordance with the request from the control managing unit 18, the transmitting unit 12 transmits, to the air-conditioning apparatus main body 2, a signal for causing the air-conditioning apparatus main body 2 to operate in cooling mode.

To stop the air-conditioning apparatus main body 2 while the air-conditioning apparatus main body 2 is in operation and the screen 101 is displayed on the display unit 13, the user touches the operation button 200 on the display unit 13. When the operation button 200 is touched, the remote control device 1 performs the same operation as that performed when the operation button 200 is touched while the air-conditioning apparatus main body 2 is not in operation. That is, the touch coordinate acquiring unit 16 acquires the coordinates of the touched point, the display content managing unit 17 identifies the type of the image, and the control managing unit 18 determines the operation.

In this example, the operation button 200 is touched while the air-conditioning apparatus main body 2 is in operation. Therefore, the control managing unit 18 sends a request to the display content managing unit 17 to display the screen 100 indicating that the air-conditioning apparatus main body 2 is not in operation in cooling mode. At the same time, the control managing unit 18 sends a request to the transmitting unit 12 to transmit, to the air-conditioning apparatus main body 2, a signal for stopping the cooling operation of the air-conditioning apparatus main body 2. In accordance with the request from the control managing unit 18, the display content managing unit 17 displays the screen 100 on the display unit 13. Also, in accordance with the request from the control managing unit 18, the transmitting unit 12 transmits, to the air-conditioning apparatus main body 2, a signal for stopping the cooling operation of the air-conditioning apparatus main body 2.

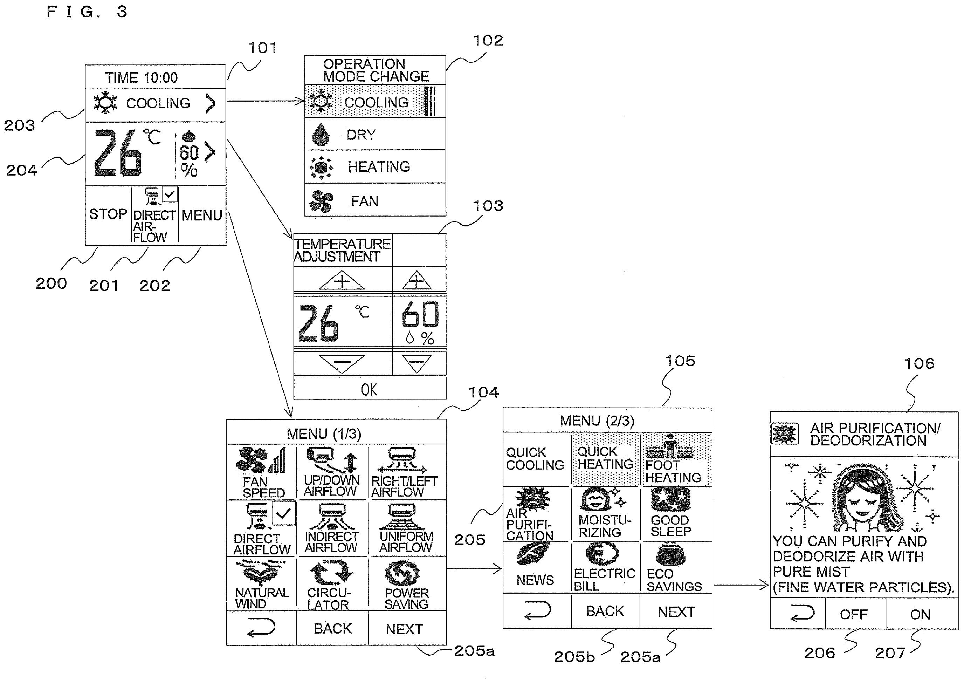

Operations performed when the operation mode button 203, the temperature/humidity button 204, and the menu button 202 are touched will be described below with reference to display screens shown in Fig. 3.

Fig. 3 illustrates a transition of the display screen based on a button operation on the remote control device according to Embodiment 1 of the present invention.

To change the operation mode on the screen 101, the user touches the operation mode button 203. When the operation mode button 203 is touched, the controller 11 causes the display screen of the display unit 13 to transition to a screen 102. A list of selectable operation modes is displayed on the screen 102. When the user touches one of the operation modes, the controller 11 causes the operation mode to be changed to the touched operation mode.

To change the set temperature or humidity on the screen 101, the user touches the temperature/humidity button 204. When the temperature/humidity button 204 is touched, the controller 11 causes a transition to a screen 103 that indicates the current set temperature and humidity. The screen 103 provides up and down buttons for each of the set temperature and the set humidity. The user can change the set temperature and the set humidity by touching the up and down buttons. Although the set temperature and the set humidity are simultaneously displayed on the screen 103, they do not necessarily need to be simultaneously displayed. A screen indicating only a set temperature may be displayed first and, after a temperature is set, the screen may transition to a screen for setting a humidity. This process may take place in reverse order, from humidity to temperature. The temperature/humidity button 204 may be divided into two buttons for transition to different setting screens.

In heating mode, it is often not necessary to adjust the humidity. Therefore, when the air-conditioning apparatus main body 2 is in heating mode, the temperature/humidity button 204 on the screen 101 and the screen 103 may indicate only a temperature. In dehumidifying (dry) mode, it is not necessary to adjust the temperature. Therefore, when the air-conditioning apparatus main body 2 is in dry mode, the temperature/humidity button 204 on the screen 101 and the screen 103 may indicate only a humidity. Since the temperature and the humidity cannot be adjusted when the air-conditioning apparatus main body 2 is in fan mode, the temperature/humidity button 204 on the screen 101 may be disabled or may not be displayed.

Next, an operation performed when the menu button 202 is touched will be described. When the menu button 202 is touched, the controller 11 causes the display screen of the display unit 13 to transition to a screen 104 (menu screen). A list of function buttons corresponding to functions that can be set and operated by the remote control device 1 is displayed on the screen 104. An image for identifying the corresponding function is displayed on each of the function buttons.

When the display unit 13 is large enough, function buttons corresponding to all functions can be displayed on the single screen 104. However, when there are a large number of functions or the display unit 13 is not large enough, not all the functions can be displayed on a single screen. In this case, function buttons that cannot be displayed on the initial screen are sequentially displayed on one or more additional screens by switching the screen with a switching button (NEXT button 205a on the screen 104).

In recent years, air-conditioning apparatus have become equipped with various sensors and an ever-increasing number of functions. A remote control device for a domestic air-conditioning apparatus is designed to be handheld, and thus is difficult to have the display unit 13 of sufficient size. Therefore, it has become increasingly difficult to display all function buttons on a single screen. That is, as described above, it has become increasingly necessary to display a plurality of functions on different screens by switching the screen from one to another.

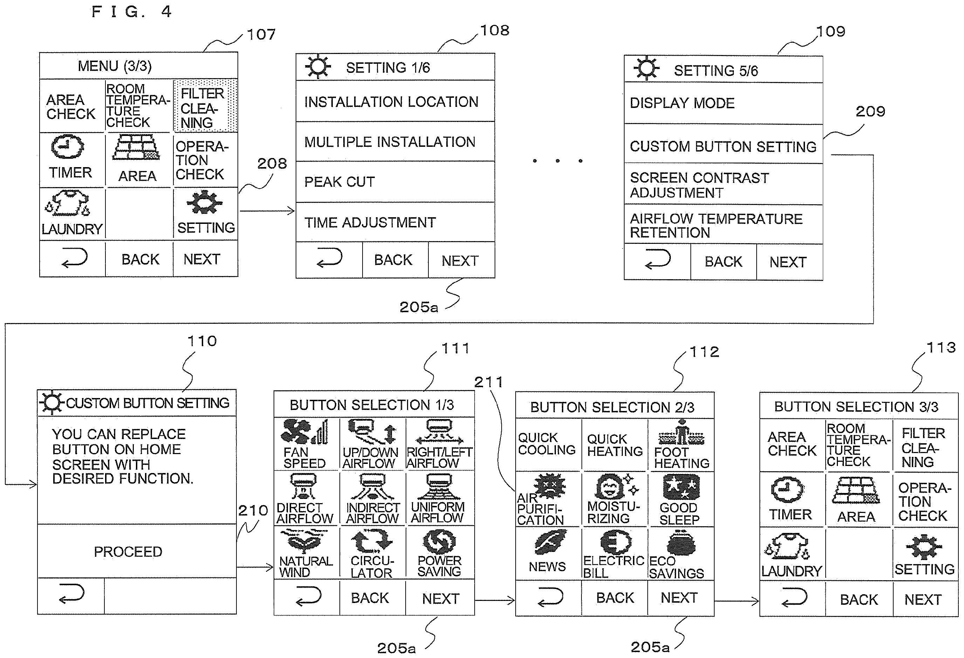

Fig. 3 illustrates an example of displaying a plurality of functions on different screens by switching the screen from one to another. When the NEXT button 205a is touched on the screen 104, the controller 11 causes the display screen of the display unit 13 to transition to a screen 105. Touching a BACK button 205b on the screen 105 allows the user to return to the screen 104. When the NEXT button 205a is touched on the screen 105, the controller 11 causes the display screen of the display unit 13 to transition to a screen 107 (see Fig. 4). The screen 104, the screen 105, and the screen 107 correspond to a menu screen of the present invention.

From a list of functions displayed on one of the menu screens (i.e., the screens 104, 105, and 107), the user selects a function not displayed on the screen 101. For example, when the user wants to select an air purification and deodorization function, the user touches the menu button 202 on the screen 101 to display the screen 104 to search the screen 104 for the air purification and deodorization function. Since the air purification and deodorization function is not displayed on the screen 104, the user touches the NEXT button 205a to display the screen 105. Since the air purification and deodorization function is displayed on the screen 105, the user touches an AIR PURIFICATION button 205. When the intended function is not displayed on the screen 105, the user touches the NEXT button 205a again to display the screen 107 (see Fig. 4) to search for the intended function.

When the AIR PURIFICATION button 205 is touched, the controller 11 causes the display screen of the display unit 13 to transition from the screen 105 to a screen 106. When an ON button 207 is touched on the screen 106, the controller 11 activates the air purification and deodorization function. When an OFF button 206 is touched on the screen 106, the controller 11 deactivates the air purification and deodorization function. Although the controller 11 causes the display screen of the display unit 13 to transition from the screen 105 to the screen 106 to activate or deactivate the air purification and deodorization function in this example, the control for activating or deactivating the air purification and deodorization function is not limited to the method described above. For example, without the transition from the screen 105 to the screen 106, the air purification and deodorization function may be directly activated or deactivated by the press of a button on the screen 105. This applies not only to the air purification and deodorization function, but to all the other functions on the menu screens.

A desired function can be activated by performing the operation described above. However, time and steps are generally required to select a desired function from menus in such a manner. Therefore, it is cumbersome to select a frequently used function every time.

In Embodiment 1, the custom button 201 is used to reduce such time and steps. The custom button 201 is displayed on the screen 101 during a normal operating period (including immediately after the start of operation) and also on the screen 100 during a normal non-operating period (including immediately after the stop of operation). Hereinafter, the screens 101 and 100 displayed as top screens during the normal operating period and the non-operating period, respectively, will be collectively referred to as main screens. A frequently used function is assigned to the custom button 201 on the main screens to facilitate the setting for the function (e.g., activation or deactivation of the function). A method of assigning a desired function to the custom button 201 will be described below with reference to Fig. 4.

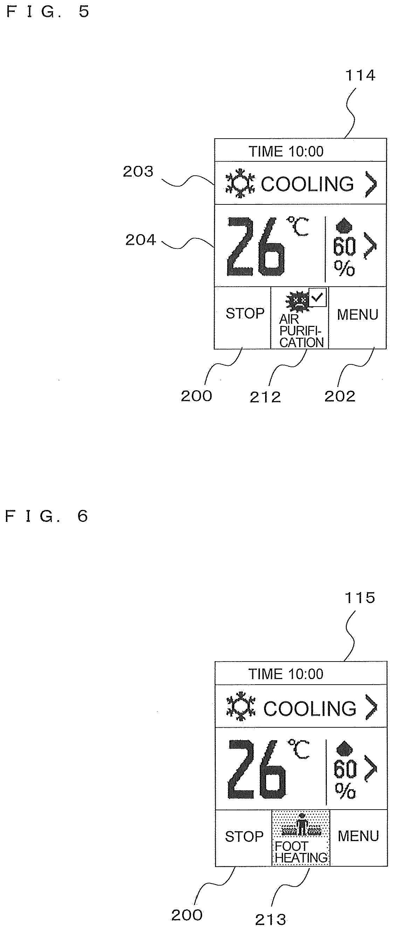

Fig. 4 illustrates a screen transition for setting a custom button in the remote control device according to Embodiment 1 of the present invention. Figs. 5 and 6 each show an exemplary screen that appears after a custom button is set in Fig. 4. In this example, the air purification and deodorization function is assigned to the custom button 201.

When a SETTING button 208 is touched on the screen 107, the controller 11 causes the display screen of the display unit 13 to transition to a screen 108. When the display unit 13 is large enough, all setting items can be displayed on the single screen 108. However, when there are a large number of setting items or the display unit 13 is not large enough, not all the setting items can be displayed on a single screen. In this case, setting items that cannot be displayed on the initial screen are sequentially displayed on one or more additional screens by switching the screen with a switching button (NEXT button 205a on the screen 108).

Fig. 4 shows a plurality of setting items displayed on different screens. When the NEXT button 205a is touched on the screen 108, and then a NEXT button is sequentially touched on each transitioned screen, the controller 11 causes the display screen of the display unit 13 to transition to a screen 109. When a CUSTOM BUTTON SETTING button 209 is touched on the screen 109, the controller 11 causes the display screen of the display unit 13 to transition to a screen 110. A description of the custom button and a PROCEED button 210 for proceeding to the next screen are displayed in the screen 110.

When the PROCEED button 210 is touched, the controller 11 causes the display unit 13 to display a screen 111 on which a list of functions that can be assigned to the custom button 201 is displayed. In this example, three screens 111 to 113 each serve as a function list screen on which a list of functions that can be assigned to the custom button 201 is displayed. When, in this example, when an AIR PURIFICATION button 211 corresponding to the air purification and deodorization function to be assigned to the custom button 201 (see Fig. 2) is touched on the screen 112, the controller 11 assigns the air purification and deodorization function to the custom button 201. On completion of this setting, the controller 11 changes the custom button 201, which is assigned a direct airflow function on the screen 101 (see Fig. 2), to a custom button 212 (Fig. 5) to which the air purification and deodorization function is assigned. To allow the user to identify the function newly assigned to the custom button 212, the controller 11 changes an image representing the direct airflow function to an image representing the air purification and deodorization function.

As described above, a desired function (air purification and deodorization function in this example) is assigned to the custom button 201 (see Fig. 2) on the main screen. Then, when the custom button 212 (Fig. 5) to which the air purification and deodorization function is assigned is touched, the controller 11 causes the display screen of the display unit 13 to directly transition to the screen 106 (see Fig. 3) for activating or deactivating the air purification and deodorization function.

The screens 108 and 109 displayed when the SETTING button 208 on the screen 107 is touched provide a list of rarely used setting items. For example, the rarely used setting items are items for which setting is typically performed just once on purchase (i.e., at the time of installation of the air-conditioning apparatus). The operation of assigning a function to the custom button 201 is basically not an operation frequently performed by the user. Therefore, "CUSTOM BUTTON SETTING" is displayed on the screen displayed by touching the SETTING button 208.

The screens 111 to 113, which are function list screens, will be described below. The function list screens (i.e., the screens 111 to 113) have exactly the same configuration as the menu screens (i.e., the screens 104, 105, and 107) displayed after the menu button 202 is touched. This means that functions that can be assigned to the custom button 201 are those listed on the screens 104, 105, and 107. Thus, the screens displayed after the menu button 202 is touched and used to select a function are the same as those used to select a function to be assigned to the custom button 201.

The rarely used setting items displayed on the screens 108 and 109 are functions of the air-conditioning apparatus. However, the rarely used setting items are not displayed on the function list screens which provide a list of functions that can be assigned to the custom button 201. That is, the list of functions that can be assigned to the custom button 201 is narrowed down to some of the plurality of functions of the air-conditioning apparatus. This can reduce the time and steps on the user during selection of a function to be assigned to the custom button 201.

The image on the custom button 201 is the same as that on the corresponding function button on the menu screen (i.e., the screen 104, 105, or 107) displayed after the menu button 202 is touched. Thus, the user can be easily reminded of the function assigned to the custom button 201 (212).

The image on each function button on the menu screens (i.e., the screens 104, 105, and 107) is changed in accordance with the setting status of the function. Specifically, a button corresponding to a function (direct airflow function in this example) currently selected (running) is check-marked, allowing the user to identify the current operating state. On the screen 105, buttons for functions that currently cannot be selected (in this example, a quick heating function and a foot heating function, which cannot be selected in cooling mode) are displayed as disabled images (specifically, grayed-out images etc.) indicating that they are not selectable. Thus, by changing the image on a function button in accordance with the setting status of the function, the user can easily identify the operating state, and can also identify functions in a disabled state. This improves user-friendliness of the remote control device 1.

The same applies to the image on a custom button on the main screen. That is, similarly to the image on a function button on the menu screen (i.e., the screen 104, 105, or 107) displayed after the menu button 202 is touched, when a function assigned to the custom button 201 is already set, the corresponding button (i.e., the custom button 212 on a screen 114) is check-marked, whereas when it is not a selectable function, the corresponding button (i.e., a custom button 213 on a screen 115) is displayed as a disabled image. Thus, by simply looking at the custom button on the main screen, the user can easily identify the operating state and functions in a disabled state. This improves user-friendliness of the remote control device 1.

The controller 11 associates the image on the custom button 201 with each image on the menu screens (i.e., the screens 104, 105, and 107) displayed after the menu button 202 is touched. Specifically, for example, when the heating operation is switched to the cooling operation while the custom button 201 is assigned with the quick heating function during the heating operation, the controller 11 changes a selectable image representing the quick heating function on the menu screen (screen 105) to a disabled image indicating that it is not selectable, and also changes the image on the custom button 201 to the same disabled image. This allows the user to check the current setting status on both the main screen and the menu screen.

As described above, in Embodiment 1, the custom button 201 is displayed on the main menu along with the operating state of the air-conditioning apparatus main body 2 (in operation or not, operation mode). This allows the user to operate the custom button 201 while checking the operating state of the air-conditioning apparatus main body 2. It is thus possible to activate a function in accordance with the situation, and to improve user-friendliness.

The custom button 201 can provide the same effect regardless of the display position on the screen. However, freely changing the display position of the custom button 201 confuses the user during operation. It is therefore desirable that the custom button 201 be located at a fixed position. Thus, in Embodiment 1, the custom button 201 is located at the same position (in the center at the bottom, in this example) on both of the main screens (screens 100 and 101). The same applies to the size of the custom button 201. That is, for example, the user is confused during operation if the size of the custom button 201 on the screen 100 differs from that on the screen 101. Therefore, it is desirable that the custom button 201 have the same size on both the screens 100 and 101. Thus, in Embodiment 1, the custom button 201 has the same size on both of the main screens (screens 100 and 101). This allows the user to find and operate the custom button 201 without confusion, and improves operability.

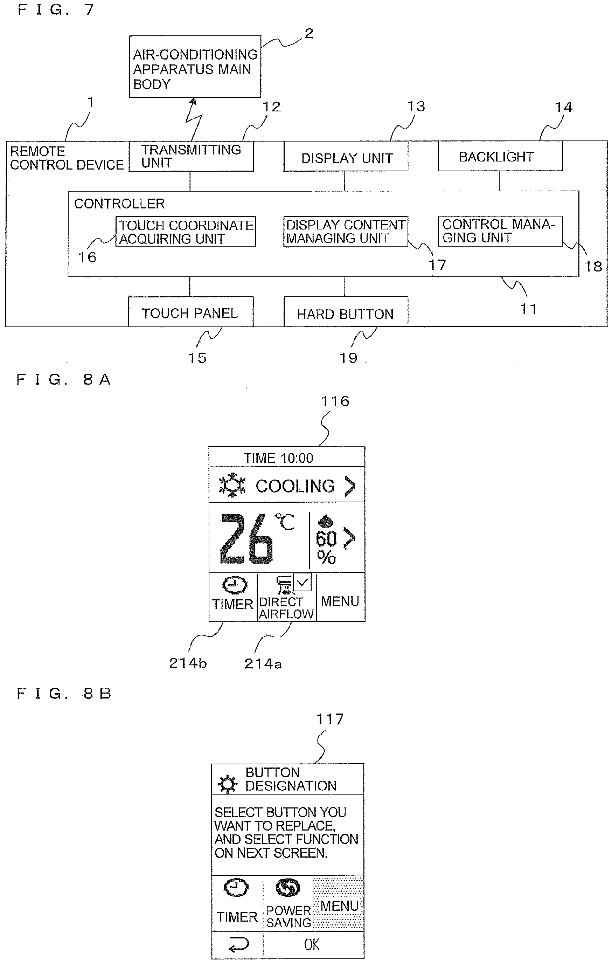

Fig. 7 is a block diagram illustrating a modification of the remote control device according to Embodiment 1 of the present invention. Fig. 8A shows a first exemplary screen in the modification illustrated in Fig. 7. Fig. 8B shows a second exemplary screen in the modification illustrated in Fig. 7.

The remote control device 1 illustrated in Fig. 7 includes a hard button 19 as well as the components illustrated in Fig. 1. The function of starting and stopping the operation of the air-conditioning apparatus main body 2 is assigned to the hard button 19. Using the hard button 19 eliminates the need for the operation button 200 on the screens 100 and 101. This allows addition of the second custom button to the region of the operation button 200 on the screen. For example, as illustrated in Fig. 8A, a custom button 214a and a custom button 214b can be arranged on a screen 116.

Thus, custom buttons for two functions (TIMER and DIRECT AIRFLOW in Fig. 8A) can be arranged on the main screen, improving user-friendliness. With two custom buttons, when the PROCEED button 210 is touched on the screen 110 for setting a custom button in Fig. 4, the controller 11 needs to display a screen such as a screen 117 shown in Fig. 8B for the user to select which button to change, instead of causing the display screen of the display unit 13 to directly transition to the screen 111.

### Embodiment 2

Although the display mode is normal mode (first mode) in Embodiment 1, Embodiment 2 provides simple mode (second mode) as another display mode. Simple mode differs from normal mode in the extent of a permissible screen transition. Normal mode permits a screen transition. For example, pressing the menu button 202 (see Fig. 3) in normal mode causes the screen 101 to transition to the screen 104. On the other hand, simple mode partly prohibits such a screen transition (i.e., prohibits a screen transition, except in the case of starting and stopping the operation, special operations, and abnormal conditions). Embodiment 2 is characterized by a display operation in the event of an abnormality in simple mode, and also by an operation for switching from simple mode to normal mode. These operations will be sequentially described below in detail.

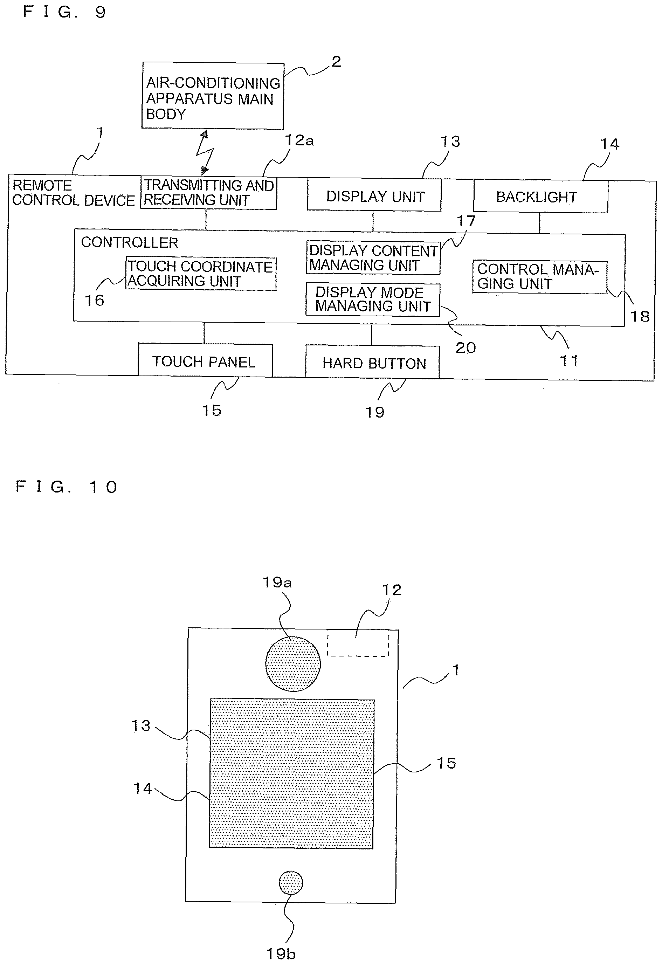

Fig. 9 is a control block diagram of a remote control device according to Embodiment 2 of the present invention.

The controller 11 of the remote control device 1 according to Embodiment 2 includes a transmitting and receiving unit 12a, instead of the transmitting unit 12 of the remote control device 1 according to Embodiment 1 illustrated in Fig. 1, and further includes a display mode managing unit 20 that manages the display mode displayed on the display unit 13. Hereinafter, differences of Embodiment 2 from Embodiment 1 will be mainly described. The modifications applicable to Embodiment 1 are also applicable to the corresponding components in Embodiment 2.

Fig. 10 is an external view of the remote control device according to Embodiment 2 of the present invention.

In Fig. 10, an operation button 19a is used to control (or switch between) the start and stop of the air-conditioning apparatus main body 2. When a screen illuminating button 19b is pressed while the display unit 13 is not illuminated, the display unit 13 and the backlight 14 light up and the function of the touch panel 15 is activated. When the remote control device 1 is a battery-driven device, it is necessary to extend the battery life. Therefore, while the remote control device 1 is not in use, the screen illuminating button 19b is used to turn off the illuminated display unit 13 and the backlight 14 and, in some cases, to stop the touch panel 15. After the display unit 13 and the backlight 14 light up, when a certain period of time has elapsed without any touching operation, the illuminated display unit 13 and the backlight 14 are turned off and the function of the touch panel 15 is stopped. Both the operation button 19a and the screen illuminating button 19b are hard buttons.

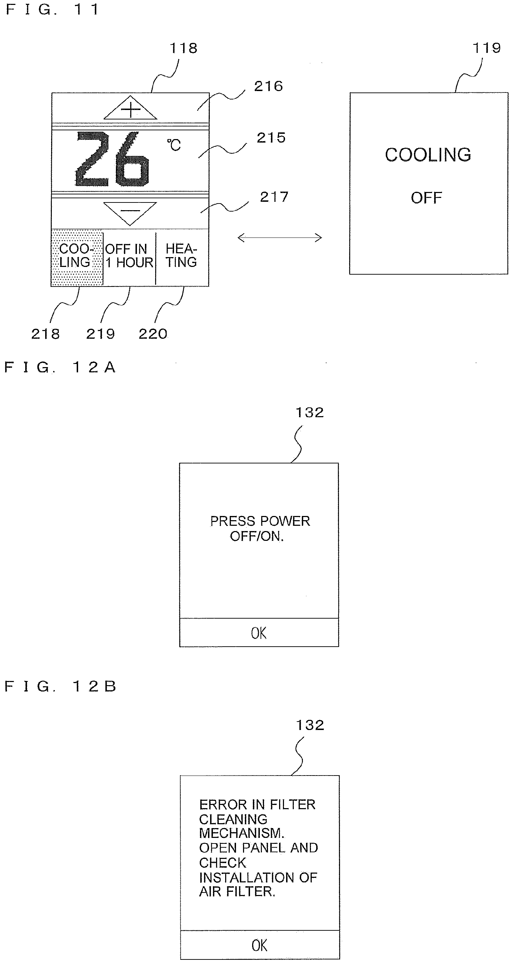

Fig. 11 shows exemplary screens in simple mode of the remote control device according to Embodiment 2 of the present invention.

A screen 118 is a simple mode screen displayed when the display mode is set to simple mode. Unlike the screens displayed in normal mode of Embodiment 1 illustrated in Figs. 2 to 6, the screen 118 does not have the operation mode button 203 and a title area indicating the time. Also, instead of the temperature/humidity button 204, the screen 118 has a temperature indicator 215, an up button 216 for increasing the set temperature, and a down button 217 for decreasing the set temperature. Also, instead of the custom button 201 and the menu button 202, the screen 118 has a COOLING button 218, an OFF IN 1 HOUR button 219, and a HEATING button 220. The screen 118 and a screen 119 (described below) correspond to a main screen in simple mode.

Simple mode will be described below with reference to Figs. 10 and 11.

In simple mode, the screen 119 is displayed on the display unit 13 while the air-conditioning apparatus main body 2 is not in operation. When the user presses the operation button 19a, the controller 11 causes the transmitting and receiving unit 12a to transmit an operation start signal to the air-conditioning apparatus main body 2 to start the operation of the air-conditioning apparatus main body 2, and causes the display unit 13 to display the screen 118. On the other hand, when the operation button 19a is pressed while the air-conditioning apparatus main body 2 is in operation, the controller 11 causes the transmitting and receiving unit 12a to transmit a stop signal to the air-conditioning apparatus main body 2 to stop the operation of the air-conditioning apparatus main body 2, and causes the display unit 13 to display the screen 119.

On the screen 118, the selection of the operation mode is limited to two modes, heating and cooling. To select an operation mode, the user touches one of the COOLING button 218 and the HEATING button 220. The controller 11 reverses the black and white of the touched button to indicate the setting status, and starts the operation mode corresponding to the touched button. As in normal mode, simple mode allows the user to change the temperature setting. When the up button 216 or the down button 217 on the screen 118 is touched, the controller 11 increases or decreases the set temperature. When the OFF IN 1 HOUR button 219 is touched, the controller 11 activates the one-hour off timer, and reverses the black and white of the OFF IN 1 HOUR button 219 on the screen 118 to indicate the setting status.

Thus, in the operation on the screen 118, which is the main screen displayed in simple mode while the air-conditioning apparatus main body 2 is in operation, it is possible to eliminate a screen transition that takes place in response to the touch of the menu button 202 (see Fig. 2). Therefore, because complicated operations can be avoided, the remote control device 1 can be easily operated even by users not good at operating household appliances.

Although the screen 118 has the OFF IN 1 HOUR button 219, a button displayed on the screen 118 in simple mode is not limited to this button. Any button may be displayed on the screen 118 as long as touching it causes no screen transition. For example, the OFF IN 1 HOUR button 219 may be replaced by a button used to change the operation mode to dry mode (in this case, the temperature indicator is replaced by a humidity indicator), or a button used to temporarily increase the fan speed. Normal mode may allow the user to change the functions of the buttons 218 to 220 on the screen 118.

In the event of an abnormality (error) in the state of the remote control device 1 or the air-conditioning apparatus main body 2, the controller 11 of the remote control device 1 of Embodiment 2 causes an abnormality notification screen 132 to be displayed, as a pop-up screen or the like, over the currently displayed screen. This will be described below.

Figs. 12A to 12C show exemplary screens displayed in the event of an abnormality in simple mode of the remote control device according to Embodiment 2 of the present invention.

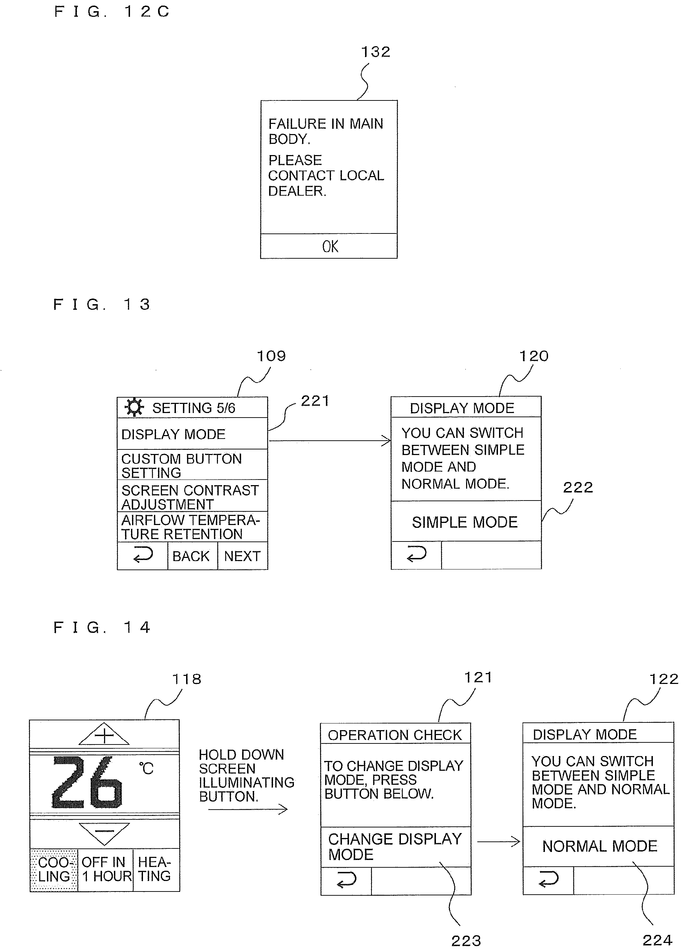

Fig. 12A shows an exemplary abnormality notification screen displayed in the event of an abnormality in the state of the remote control device 1. Specifically, Fig. 12A shows the abnormality notification screen 132 displayed by pressing the screen illuminating button 19b while the screen is illuminated when the air-conditioning apparatus main body 2 is not in operation. Figs. 12B and 12C each show an exemplary abnormality notification screen displayed in the event of an abnormality in the state of the air-conditioning apparatus main body 2. Specifically, Fig. 12B shows the abnormality notification screen 132 displayed in the event of an abnormality in the mechanism of filter cleaning, whereas Fig. 12C shows the abnormality notification screen 132 displayed in the event of a failure in the main body. The controller 11 is configured to cause the transmitting and receiving unit 12a to receive an abnormality notification signal transmitted from the air-conditioning apparatus main body 2 in the event of an abnormality in the air-conditioning apparatus main body 2. On the basis of the received abnormality notification signal, the controller 11 causes the abnormality notification screen 132 to be displayed as in Fig. 12B or 12C.

The abnormality notification screen 132 displayed on the display unit 13 of the remote control device 1 notifies the user of an abnormality. Note that the abnormality notification screens 132 shown in Figs. 12A to 12C are merely examples, and are not limited to these screens.

Next, a method of switching the display mode from normal mode to simple mode will be described. The switching of the display mode corresponds to one of the rarely used setting items described above. Therefore, a button for switching the display mode is displayed on the screen 108 or 109 displayed by touching the SETTING button 208 on the screen 107 shown in Fig. 4 of Embodiment 1. In this example, the button for switching the display mode is displayed on the screen 109 (see Figs. 4 and 13).

Fig. 13 shows a setting screen for switching the display mode from normal mode to simple mode in the remote control device according to Embodiment 2 of the present invention.

When a DISPLAY MODE button 221 is touched on the screen 109, the controller 11 causes the display screen of the display unit 13 to transition to a screen 120. A SIMPLE MODE button 222 used to switch the display mode from normal mode to simple mode is displayed on screen 120. When the SIMPLE MODE button 222 is touched, the display mode managing unit 20 of the controller 11 switches the display of the display unit 13 from the normal mode display shown in Fig. 3 to the simple mode display shown in Fig. 11.

A method of switching the display mode from simple mode to normal mode will be described below. As in Fig. 11, extra functions are removed from the screen 118 in simple mode. Therefore, the switching of display from simple mode to normal mode cannot be made by a simple button operation on the screen 118. Simple mode is a display mode used by users not good at operating household appliances. Therefore, if the display mode is easily returned from simple mode to normal mode, users not good at operating household appliances may be confused, degrading operability. It is inconvenient and should be avoided for users not good at operating household appliances that the display mode is easily returned from simple mode to normal mode only by a battery change or a reset operation, which may be generally performed even by users not good at operating household appliances.

Therefore, in Embodiment 2, the screen illuminating button 19b is used for switching from simple mode to normal mode. Normally, when the screen illuminating button 19b is pressed while the screen is not illuminated, the backlight 14 is turned on, whereas when the screen illuminating button 19b is pressed while the backlight 14 is lit, a pop-up error message is displayed on the display unit 13 on the basis of a determination that an abnormal state has occurred. These operations are assigned to the screen illuminating button 19b. If the operation of changing the display mode, instead of the operation of displaying a pop-up error message, is assigned to the screen illuminating button 19b, the display mode can be easily changed to normal mode simply by pressing the screen illuminating button 19b. Again, it is inconvenient and should be avoided for users not good at operating household appliances that the display mode is changed simply by pressing the screen illuminating button 19b.

In Embodiment 2, therefore, a setting screen for switching the display mode to normal mode is displayed by holding down the screen illuminating button 19b, for example, for about two to three seconds. The operation for displaying the setting screen is not limited to holding down the screen illuminating button 19b, and may be any special operation that is at least different from a normal operation generally performed by users not good at operating household appliances. Examples of the special operation include simultaneously pressing two hard buttons, and simultaneously pressing, or holding down, the touch panel 15 and a hard button.

Fig. 14 shows a setting screen for switching the display mode from simple mode to normal mode in the remote control device according to Embodiment 2 of the present invention.

As illustrated in Fig. 14, when the screen illuminating button 19b (see Fig. 10) is held down while the screen 118 is displayed in simple mode, the controller 11 causes the display unit 13 to display a screen 121 that is a special operation screen. When a CHANGE DISPLAY MODE button 223 is touched on the screen 121, the controller 11 causes the display unit 13 to display a screen 122 that is a setting screen for switching the display mode. When a NORMAL MODE button 224 is touched on the screen 122, the controller 11 returns the display mode to normal mode and causes the display unit 13 to display a screen in normal mode (see Fig. 3). The change of the display mode and the display of the setting screen do not immediately take place simply by holding down the screen illuminating button 19b. This is out of consideration to users who are not good at operating household appliances.

As described above, Embodiment 2 can not only provide the same effect as Embodiment 1, but can also notify the user of an abnormality by displaying an abnormality notification screen 132 in the event of a state abnormality, both in normal mode and simple mode.

Switching from simple mode to normal mode is made by a special operation, not by a simple operation such as a battery change and a reset operation. Specifically, examples of the special operation that allows switching from simple mode to normal mode do not include at least one of a battery change and a reset operation. It is thus possible to continuously and stably provide an operation screen in simple mode to users not good at operating household appliances, so that operability can be ensured.

In the example described above, when the screen illuminating button 19b is held down while the screen 118 is displayed in simple mode, a special operation screen and a setting screen for switching the display mode from simple mode to normal mode are displayed in this order. The present invention is not limited to this screen transition, and may be modified in the following manner.

An air-conditioning apparatus is basically an apparatus that blows out air. Therefore, if the air-conditioning apparatus is not capable of allowing the user to set basic functions, such as a wind direction adjustment and a fan speed adjustment, the air-conditioning apparatus cannot fully perform its functions and may cause discomfort to the user. An off timer is also a generally required function, and if the off timer cannot be set, the level of user-friendliness may be degraded. In the modification to be described in detail below, the display mode and the settings of predetermined basic functions (wind direction adjustment, fan speed adjustment, and off timer in this example) can be changed by a special operation even in simple mode.

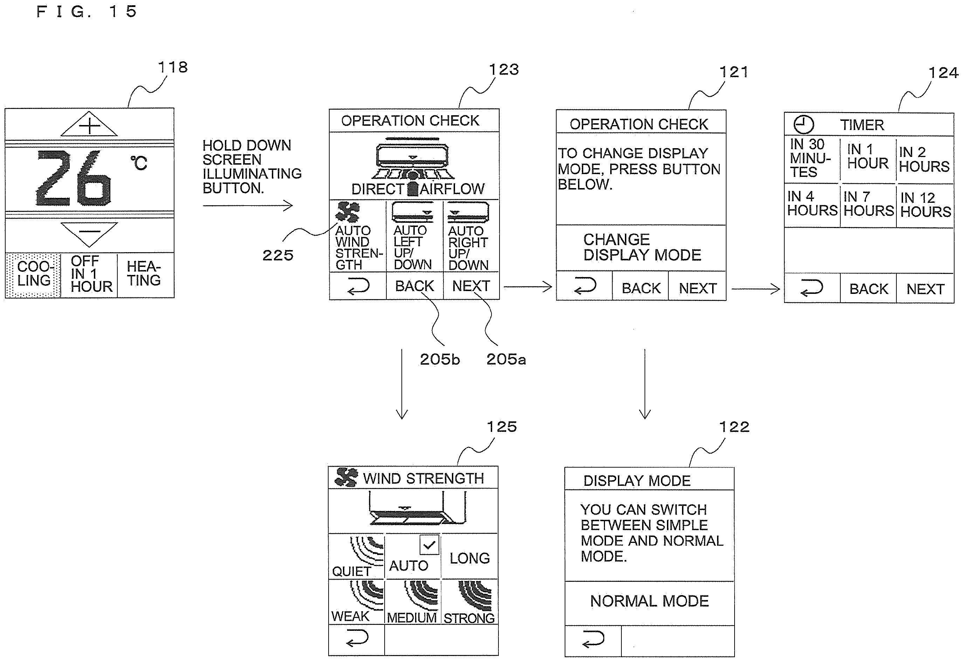

Fig. 15 illustrates a modified screen transition for switching from simple mode to normal mode in the remote control device according to Embodiment 2 of the present invention.

As illustrated in Fig. 15, when the screen illuminating button 19b is held down while the screen 118 is displayed in simple mode, the controller 11 causes the display unit 13 to display a screen 123 that is a special operation screen. Using the NEXT button 205a and the BACK button 205b allows switching back and forth between the screen 123, the screen 121, and a screen 124.

The screen 123 is for changing the settings of wind direction and fan speed of the air-conditioning apparatus main body 2. When a button on the screen 123 is touched, the controller 11 causes the display screen of the display unit 13 to transition to a setting screen corresponding to the touched button. For example, when a fan speed button 225 is touched on the screen 123, the controller 11 causes the display screen of the display unit 13 to transition to a screen 125 that is a screen for setting a fan speed. The screen 124 is a screen for setting the off timer. When any of the buttons is touched on the screen 124, the controller 11 changes the time of the one-hour off timer at the bottom of the screen 118.

It is thus possible to adjust the wind direction and the fan speed and to set the time of the off timer for each user while maintaining the ease of operation in simple mode, so that user-friendliness can be improved.

### Embodiment 3

Embodiment 3 is intended to improve operability of timer setting.

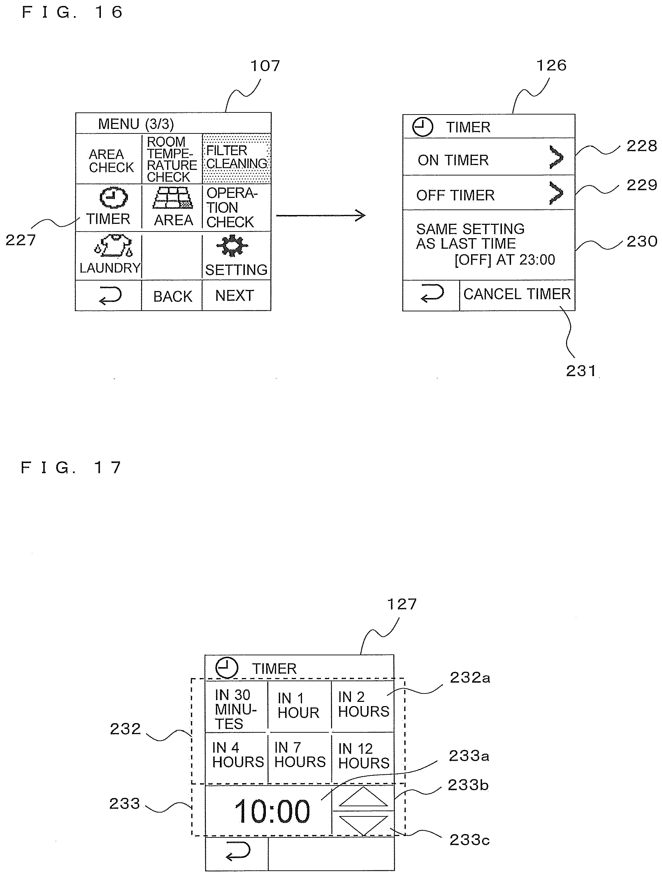

Fig. 16 illustrates a screen transition for timer setting in a remote control device according to Embodiment 3 of the present invention. Fig. 17 shows a setting screen for the timer setting in Fig. 16. Hereinafter, differences of Embodiment 3 from Embodiments 1 and 2 will be mainly described. The modifications applicable to Embodiments 1 and 2 are also applicable to the corresponding components in Embodiment 3.

In Fig. 16, the screen 107 is a main screen of the present invention as described above. A Timer button 227 is one of a plurality of function buttons displayed on the screen 107. When the TIMER button 227 is touched, the controller 11 causes the display screen of the display unit 13 to transition to a screen 126. An ON TIMER button 228, an OFF TIMER button 229, a SAME SETTING AS LAST TIME button 230, and a CANCEL TIMER button 231 are displayed on the screen 126.

The ON TIMER button 228 is a button used to set the on timer for starting the operation after a specified time interval or at a specified time point. The OFF TIMER button 229 is a button used to set the off timer for stopping the operation after a specified time interval or at a specified time point. The SAME SETTING AS LAST TIME button 230 is a button used to specify the same timer setting as the last time. The CANCEL TIMER button 231 is a button used to cancel the timer setting. When the ON TIMER button 228 or the OFF TIMER button 229 is touched, the controller 11 causes the display screen of the display unit 13 to transition to the corresponding setting screen.

A screen 127 shown in Fig. 17 is a setting screen displayed when the ON TIMER button 228 is touched on the screen 126. The screen 127 has an interval specifying region 232 for specifying a time interval between the present and the start of operation, and a time specifying region 233 for specifying a time point at which to start the operation. Embodiment 3 is characterized in that it allows timer setting to be made on the setting screen (screen 127) by specifying either a time interval or a time point.

The interval specifying region 232 provides a plurality of interval buttons 232a to which different time intervals are assigned. Each of the interval buttons 232a identifiably indicates a time interval assigned thereto. The time specifying region 233 provides a time indication setting button 233a that indicates a set time, and a time increment button 233b and a time decrement button 233c used to change the set time.

Next, an operation will be described. To set a timer, the user touches the menu button 202 on the screen 101 (see Fig. 3) and then touches the NEXT button 205a on the screens 104 and 105. In response to this, the controller 11 causes the display screen of the display unit 13 to transition to the screen 107 (see Fig. 16). When the user touches the TIMER button 227 on the screen 107, the controller 11 causes the display screen of the display unit 13 to transition to the screen 126. For example, when the TIMER button is assigned to the custom button 214b on the screen 116 as shown in Fig. 8A, the user can make a transition to the screen 126 simply by touching the custom button 214b on the screen 116.

On the screen 126, the user selects a button depending on whether the user wants to start or stop the operation of the air-conditioning apparatus main body 2 using the timer, or wants to use the same timer setting as the last time. For example, when the user wants to use the same timer setting as the last time, the user touches the SAME SETTING AS LAST TIME button 230. When the user wants to start the air-conditioning apparatus main body 2 using the timer, the user touches the ON TIMER button 228. When the user wants to stop the air-conditioning apparatus main body 2 using the timer, the user touches the OFF TIMER button 229. The timer can be cancelled on the screen 126. To cancel the timer, the user touches the CANCEL TIMER button 231 on the screen 126.

On detecting the touch of the ON TIMER button 228, the controller 11 causes the display screen of the display unit 13 to transition to the screen 127 in Fig. 17. The user sets when to start the operation by specifying either a time interval or a time point. To specify a time interval, the user touches a desired one of the plurality of interval buttons 232a in the interval specifying region 232. To specify a time point, the user touches the time increment button 233b and the time decrement button 233c, as necessary, to change the operation start time displayed on the time indication setting button 233a. When the operation start time displayed on the time indication setting button 233a reaches a desired time, the user touches the time indication setting button 233a.

On detecting a touch in the interval specifying region 232 or the time specifying region 233, the controller 11 ends the timer setting process corresponding to the touched button. At the same time, the controller 11 causes the display unit 13 to display a pop-up (not shown) indicating that the setting operation has ended. On detecting the touch of the OFF TIMER button 229 or the CANCEL TIMER button 231, the controller 11 similarly performs the process corresponding to the touched button.

As described above, Embodiment 3 can not only provide the same effect as Embodiments 1 and 2, but can also provide the following effect. That is, Embodiment 3 allows the user to specify both a time interval and a time point on the same screen to set the timer. This provides better user-friendliness than a conventional configuration where buttons used to specify a time interval are arranged at locations separate from those for buttons used to specify a time point. Also, as in Fig. 16, a list of timer-related functions, such as ON TIMER, OFF TIMER, SAME SETTING AS LAST TIME, and CANCEL TIMER, are displayed on the screen 126. This can reduce user confusion and improve operability.

Additionally, as in Fig. 17, the interval specifying region 232 of the screen 127, which is a timer setting screen, provides the interval buttons 232a each representing a time interval, instead of up and down buttons for specifying a time point, or a toggle button for changing the time point every time it is touched. If the interval specifying region 232 provides up and down buttons for specifying a time point, or a toggle button for changing the time point every time it is touched, upper and lower limit values and time increments and decrements of the up and down buttons may be unclear during button operation, or the number of operations may increase. This degrades operability.

However, on the screen 127, the plurality of interval buttons 232a is provided as a list in the interval specifying region 232. This can reduce user confusion in specifying a time interval and improve operability. The time intervals represented by the interval buttons 232a are 30 minutes, 1 hour, 2 hours, 4 hours, 7 hours, and 12 hours in this example, but are not limited to them. The same effect can be achieved with any other time intervals. The user may be allowed to freely change these time intervals. The number of the interval buttons 232a is six in this example, but the number is not limited to this and can be changed to any value.

The display screens of the remote control device 1 according to Embodiment 3 are not limited to those shown in Figs. 16 and 17, and various modifications can be made thereto without departing from the scope of the present invention. Modified display screens will be described below.

### (Modification 1)

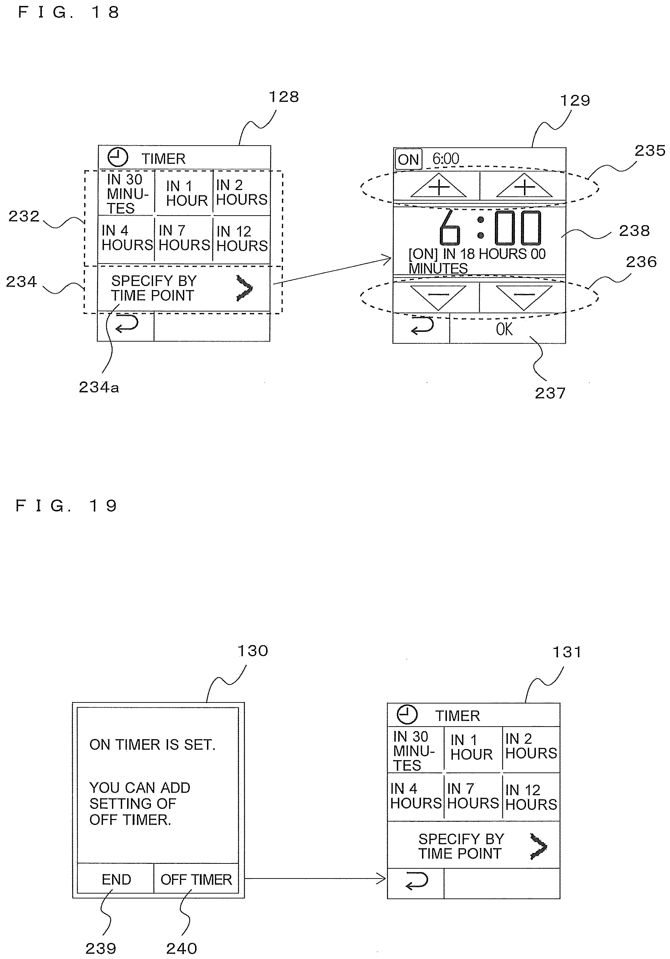

Fig. 18 illustrates a modification of the setting screen for timer setting in the remote control device according to Embodiment 3 of the present invention.

In Fig. 18, a screen 128 has the interval specifying region 232 that is the same as that in Fig. 17, and a time specifying region 234 that is different from the time specifying region 233 in Fig. 17. The time specifying region 234 provides a SPECIFY BY TIME POINT button (time specifying button) 234a, instead of the time indication setting button 233a, the time increment button 233b, and the time decrement button 233c in the time specifying region 233 described above. A screen 129 appears by touching the SPECIFY BY TIME POINT button 234a on the screen 128. The screen 129 provides time increment buttons 235, time decrement buttons 236, an OK button 237, and a time indicator 238.

An operation will be described below. By reading the words "SPECIFY BY TIME POINT" on the SPECIFY BY TIME POINT button 234a displayed on the screen 128, the user recognizes that a time point can be specified by using this button. When the user touches the SPECIFY BY TIME POINT button 234a, the controller 11 causes the display screen of the display unit 13 to transition to the screen 129. By touching a time increment button 235 and a time decrement button 236 on the screen 129 as necessary, the user changes the operation start time displayed on the time indicator 238. When the operation start time displayed on the time indicator 238 reaches a desired time point, the user touches the OK button 237.

On detecting the touch of the OK button 237, the controller 11 ends the setting operation, with the operation start time indicated by the time indicator 238 specified as the time at which the air-conditioning apparatus main body 2 starts the operation. At the same time, the controller 11 causes the display unit 13 to display a pop-up (not shown) indicating that the setting operation has ended. After the pop-up is displayed, for example, the display screen returns to the screen 101 in Fig. 3.

As described above, in Modification 1, the timer setting screen provides the SPECIFY BY TIME POINT button 234a, instead of the three buttons, the time indication setting button 233a, the time increment button 233b, and the time decrement button 233c in Fig. 17. This setting screen allows setting of a timer by specifying either a time interval or a time point even when the display unit 13 is not large enough. Therefore, even when the display unit 13 is small, the user can set a timer on the screen 128 without confusion during operation, and operability can be improved.

### (Modification 2)

On completion of timer setting on the screen 127 in Fig. 17 or on the screens 128 and 129 in Fig. 18, a pop-up (not shown) indicating that the setting has ended is displayed as described above. For example, the case is assumed that the user wants to use both the on and off timers when using the screens 126 to 129. Since the remote control device 1 is unable to determine whether the user wants to use both or only one of the on and off timers, the user needs to separately set each of the on and off timers. In Modification 2, the pop-up displayed on completion of timer setting asks the user whether to use both the on and off timers. When the user wants to use both the on and off timers, the display screen transitions to the timer setting screen, without returning to the screen 101 (see Fig. 3), to allow the user to continue the timer setting. The details will be described below.

Fig. 19 shows a modified pop-up displayed on completion of timer setting in the remote control device according to Embodiment 3 of the present invention.

A screen 130 in Fig. 19 is a pop-up that is displayed on completion of timer setting on the screen 127 in Fig. 17 and the screens 128 and 129 in Fig. 18, and indicates that the setting operation has ended. A screen 131 is an off timer setting screen.

An operation will be described below. The screen 130 that is the pop-up displayed on completion of timer setting asks the user whether to use both the on and off timers. When the user wants to use the on timer alone, the user touches an END button 239 on the screen 130. When the user wants to use both the on and off timers, the user touches an OFF TIMER button 240.

When detecting the touch of the END button 239, the controller 11 returns the display screen of the display unit 13, for example, to the screen 101 (see Fig. 3). When detecting the touch of the OFF TIMER button 240, the controller 11 causes the display screen of the display unit 13 to transition to the screen 131. The screen 131 allows the user to set the off timer in the same manner as on the screen 128, which allows the user to set the on timer as described above.

In Modification 2, the pop-up displayed on completion of timer setting asks the user whether to use both the on and off timers. When the user wants to use both timers, the display screen transitions to another timer setting screen. Thus, regardless of whether the user wants to set either one or both of the on and off timers, the user can perform timer setting without confusion during operation, and operability can be improved. When the user wants to use both the on and off timers, the screen 130 transitions to the screen 131 in this example. When there is a restriction on the timer setting (e.g., both timers can be used only in the case of specifying by time point), the screen 130 may transition to a setting screen, such as the screen 129, for setting a time point.

In Embodiments described above, the apparatus to be operated by the remote control device 1 is an air-conditioning apparatus. However, the apparatus to be operated is not limited to the air-conditioning apparatus.

### Reference Signs List

1 remote control device 2 air-conditioning apparatus main body 11 controller 12 transmitting unit 12a transmitting and receiving unit 13 display unit 14 backlight 15 touch panel 16 touch coordinate acquiring unit 17 display content managing unit 18 control managing unit 19 hard button 19a operation button 19b screen illuminating button 20 display mode managing unit 100 screen (main screen) 101 screen (main screen) 102 screen 103 screen 104 screen (menu screen) 105 screen (menu screen) 106 screen 107 screen (menu screen) 108 screen 109 screen 110 screen 111 screen (function list screen) 112 screen (function list screen) 113 screen (function list screen) 114 screen 115 screen 116 screen 117 screen 118 screen 119 screen 120 screen 121 screen (setting screen for switching display mode) 122 screen 123 screen (setting screen for changing settings of apparatus functions) 124 screen 125 screen 126 screen 127 screen (timer setting screen) 128 screen (timer setting screen) 129 screen 130 screen (screen for asking whether to perform setting of the other timer) 131 screen 132 screen (abnormality notification screen) 200 operation button 201 custom button 202 menu button 203 operation mode button 204 temperature/humidity button 205 AIR PURIFICATION button 205a NEXT button 205b BACK button 206 OFF button 207 ON button 208 SETTING button 209 CUSTOM BUTTON SETTING button 210 PROCEED button 211 AIR PURIFICATION button 212 custom button 213 custom button 214a custom button 214b custom button 215 temperature indicator 216 up button 217 down button 218 COOLING button 219 OFF IN 1 HOUR button 220 HEATING button 221 DISPLAY MODE button 222 SIMPLE MODE button 223 CHANGE DISPLAY MODE button 224 NORMAL MODE button 225 fan speed button 227 TIMER button 228 ON TIMER button 229 OFF TIMER button 230 SAME SETTING AS LAST TIME button 231 CANCEL TIMER button 232 interval specifying region 232a interval button 233 time specifying region 233a time indication setting button 233b time increment button 233c time decrement button 234 time specifying region 234a SPECIFY BY TIME POINT button 235 time increment button 236 time decrement button 237 OK button 238 time indicator 239 END button 240 OFF TIMER button

## Claims

1. A remote control device (1) comprising:
a display unit (13) configured to display various screens including at least one main screen indicating an operating state of an air-conditioning apparatus to be operated;
a touch panel (15) disposed over the display unit (13); and
a controller (11) configured to cause at least one custom button to be displayed on the main screen along with a display representing an operation mode and whether in operation or not as the operating state, the custom button being assigned with one of a plurality of functions of the air-conditioning apparatus in accordance with a user operation, wherein
the controller (11) is, in accordance with a setting status of the corresponding one of the plurality of functions, configured to change an image on the custom button into any one of
(i) a selectable image indicating that the corresponding one of the plurality of functions is selectable,
(ii) an image indicating that the corresponding one of the plurality of functions is selected, or
(iii) a disabled image indicating that the corresponding one of the plurality of functions is not selectable in the current operation mode.

2. The remote control device (1) of claim 1, wherein the at least one main screen comprises a plurality of main screens each corresponding to the operating state of the air-conditioning apparatus, and the custom button is located at a same position in all the plurality of main screens.

3. The remote control device (1) of claim 2, wherein the plurality of main screens includes a main screen displayed while the air-conditioning apparatus is in operation and a main screen displayed while the air-conditioning apparatus is not in operation.

4. The remote control device (1) of any one of claims 1 to 3, wherein when a user operation of assigning one of the plurality of functions to the custom button is started on the touch panel (15), the controller (11) causes the display unit (13) to display a function list screen on which function buttons corresponding to some of the plurality of functions of the air-conditioning apparatus are displayed, and when one of the function buttons on the function list screen is touched, the controller (11) assigns the one of the plurality of functions corresponding to the touched one of the function buttons to the custom button.

5. The remote control device (1) of claim 4, wherein when a user operation of displaying a menu screen is performed on the touch panel (15), the controller (11) causes the display unit (13) to display the menu screen having a plurality of function buttons, and the plurality of functions corresponding to the plurality of function buttons on the function list screen is the same as the plurality of functions corresponding to the plurality of function buttons on the menu screen.

6. The remote control device (1) of claim 5, wherein an image representing the corresponding one of the plurality of functions is displayed on each of the plurality of function buttons on the menu screen, and the same image as the image corresponding to the one of the plurality of functions assigned to the custom button on the menu screen is displayed on the custom button on the main screen.

7. The remote control device (1) of claim 5 or 6, wherein the controller (11) causes the image on the custom button and the image on the corresponding one of the plurality of function buttons on the menu screen to change linked with each other in accordance with a change in the setting status of the corresponding one of the plurality of functions.

8. The remote control device (1) of any one of claims 1 to 7, wherein the at least one custom button comprises a plurality of custom buttons.

## Patentansprüche

1. Fernsteuerungseinrichtung (1), umfassend:
eine Anzeigeeinheit (13), die eingerichtet ist, verschiedene Bildschirme anzuzeigen, die zumindest einen Hauptbildschirm umfassen, der einen Betriebszustand einer zu betreibenden Klimaanlage anzeigt;
ein Berührungsfeld (15), das über der Anzeigeeinheit (13) angeordnet ist; und
eine Steuerungseinheit (11), die eingerichtet ist, zu bewirken, dass zumindest eine benutzerdefinierte Schaltfläche, die auf dem Hauptbildschirm anzuzeigen ist, zusammen mit einer Anzeige angezeigt wird, die einen Betriebsmodus darstellt und unabhängig davon, ob in Betrieb oder nicht als der Betriebszustand vorliegt, der benutzerdefinierten Schaltfläche eine von einer Vielzahl von Funktionen der Klimaanlage gemäß einer Benutzeroperation zugeordnet wird,
wobei
die Steuerungseinheit (11), gemäß einem Einstellungsstatus der entsprechenden aus der Vielzahl von Funktionen, eingerichtet ist, ein Bild auf der benutzerdefinierten Schaltfläche in irgendeines zu verändern von:
(i) einem auswählbaren Bild, das anzeigt, dass das entsprechende aus der Vielzahl der Funktionen auswählbar ist,
(ii) einem Bild, das anzeigt, dass die entsprechende aus der Vielzahl der Funktionen ausgewählt ist, oder
(iii) einem deaktivierten Bild, das anzeigt, dass die entsprechende aus der Vielzahl von Funktionen im laufenden Betriebsmodus nicht auswählbar ist.

2. Fernsteuerungseinrichtung (1) nach Anspruch 1, wobei der zumindest eine Hauptbildschirm eine Vielzahl von Hauptbildschirmen umfasst, die jeweils dem Betriebszustand der Klimaanlage entsprechen, und die benutzerdefinierte Schaltfläche an einer gleichen Position in allen der Vielzahl von Hauptbildschirmen angeordnet ist.

3. Fernsteuerungseinrichtung (1) nach Anspruch 2, wobei die Vielzahl von Hauptbildschirmen einen Hauptbildschirm, der angezeigt wird, während die Klimaanlage in Betrieb ist, und einen Hauptbildschirm, der angezeigt wird, während die Klimaanlage nicht in Betrieb ist, umfasst.

4. Fernsteuerungseinrichtung (1) nach einem der Ansprüche 1 bis 3, wobei, wenn eine Benutzeroperation des Zuordnens einer aus der Vielzahl von Funktionen zur benutzerdefinierten Schaltfläche auf dem Berührungsfeld (15) gestartet wird, die Steuerungseinheit (11) bewirkt, dass die Anzeigeeinheit (13) einen Funktionslistenbildschirm anzeigt, auf dem Funktionsschaltflächen angezeigt werden, die einigen der Vielzahl von Funktionen der Klimaanlage entsprechen, und wenn eine der Funktionsschaltfläche auf dem Funktionslistenbildschirm berührt wird, die Steuerungseinheit (11) der einen aus der Vielzahl von Funktionen, die der einen berührten aus den Funktionsschaltflächen entspricht, die benutzerdefinierte Schaltfläche zuordnet.

5. Fernsteuerungseinrichtung (1) nach Anspruch 4, wobei, wenn eine Benutzeroperation des Anzeigens eines Menübildschirms auf dem Berührungsfeld (15) durchgeführt wird, die Steuerungseinheit (11) bewirkt, dass die Anzeigeeinheit (13) den Menübildschirm anzeigt, der eine Vielzahl von Funktionsschaltflächen aufweist, und die Vielzahl von Funktionen, die der Vielzahl von Funktionsschaltflächen auf dem Funktionslistenbildschirm entsprechen, die gleiche ist wie die Vielzahl von Funktionen, die der Vielzahl von Funktionsschaltflächen auf dem Menübildschirm entsprechen.

6. Fernsteuerungseinrichtung (1) nach Anspruch 5, wobei ein Bild, das die entsprechende aus der Vielzahl von Funktionen darstellt, auf jeder der Vielzahl von Funktionsschaltflächen auf dem Menübildschirm angezeigt wird, und das gleiche Bild wie das Bild, das der einen aus der Vielzahl von Funktionen entspricht, die der benutzerdefinierten Schaltfläche auf dem Menübildschirm zugeordnet ist, auf der benutzerdefinierten Schaltfläche auf dem Hauptbildschirm angezeigt wird.

7. Fernsteuerungseinrichtung (1) nach Anspruch 5 oder 6, wobei die Steuerungseinheit (11) bewirkt, dass sich das Bild auf der benutzerdefinierten Schaltfläche und das Bild auf der entsprechenden aus der Vielzahl von Funktionsschaltflächen auf dem Menübildschirm miteinander verknüpft verändern gemäß einer Änderung im Einstellungsstatus der entsprechenden aus der Vielzahl der Funktionen.

8. Fernsteuerungseinrichtung (1) nach einem der Ansprüche 1 bis 7, wobei die zumindest eine benutzerdefinierte Schaltfläche eine Vielzahl von benutzerdefinierten Schaltflächen umfasst.

## Revendications

1. Dispositif de commande à distance (1) comprenant :
une unité d'affichage (13) configurée de manière à afficher divers écrans incluant au moins un écran principal indiquant un état de fonctionnement d'un appareil de climatisation à exploiter ;
un écran tactile (15) disposé au-dessus de l'unité d'affichage (13) ; et
un contrôleur (11) configuré de manière à permettre l'affichage d'au moins un bouton personnalisé sur l'écran principal avec un affichage représentant un mode de fonctionnement, et indiquant s'il est en fonctionnement ou non, en tant que l'état de fonctionnement, le bouton personnalisé étant affecté de l'une d'une pluralité de fonctions de l'appareil de climatisation conformément à une opération d'utilisateur, dans lequel :
le contrôleur (11) est, conformément à un statut de réglage de la fonction correspondante de la pluralité de fonctions, configuré de manière à remplacer une image, sur le bouton personnalisé, par l'une quelconque parmi
(i) une image sélectionnable indiquant que la fonction correspondante de la pluralité de fonctions est sélectionnable ;
(ii) une image indiquant que la fonction correspondante de la pluralité de fonctions est sélectionnée ; ou
(iii) une image désactivée indiquant que la fonction correspondante de la pluralité de fonctions n'est pas sélectionnable dans le mode de fonctionnement en cours.

2. Dispositif de commande à distance (1) selon la revendication 1, dans lequel ledit au moins un écran principal comprend une pluralité d'écrans principaux correspondant chacun à l'état de fonctionnement de l'appareil de climatisation, et le bouton personnalisé est situé à une même position dans l'ensemble de la pluralité d'écrans principaux.

3. Dispositif de commande à distance (1) selon la revendication 2, dans lequel la pluralité d'écrans principaux inclut un écran principal affiché tandis que l'appareil de climatisation est en fonctionnement, et un écran principal affiché tandis que l'appareil de climatisation n'est pas en fonctionnement.

4. Dispositif de commande à distance (1) selon l'une quelconque des revendications 1 à 3, dans lequel, lorsqu'une opération d'utilisateur consistant à affecter l'une de la pluralité de fonctions au bouton personnalisé est initiée sur l'écran tactile (15), le contrôleur (11) amène l'unité d'affichage (13) à afficher un écran de liste de fonctions sur lequel sont affichés des boutons de fonctions correspondant à certaines fonctions de la pluralité de fonctions de l'appareil de climatisation, et lorsque l'un des boutons de fonctions de l'écran de liste de fonctions est effleuré, le contrôleur (11) affecte la fonction de la pluralité de fonctions correspondant au bouton effleuré des boutons de fonctions au bouton personnalisé.

5. Dispositif de commande à distance (1) selon la revendication 4, dans lequel, lorsqu'une opération d'utilisateur consistant à afficher un écran de menu est mise en oeuvre sur l'écran tactile (15), le contrôleur (11) amène l'unité d'affichage (13) à afficher l'écran de menu présentant une pluralité de boutons de fonctions, et la pluralité de fonctions correspondant à la pluralité de boutons de fonctions sur l'écran de liste de fonctions est identique à la pluralité de fonctions correspondant à la pluralité de boutons de fonctions sur l'écran de menu.

6. Dispositif de commande à distance (1) selon la revendication 5, dans lequel une image représentant la fonction correspondante de la pluralité de fonctions est affichée sur chaque bouton de fonction de la pluralité de boutons de fonctions sur l'écran de menu, et la même image que l'image correspondant à la fonction de la pluralité de fonctions affectée au bouton personnalisé sur l'écran de menu est affichée sur le bouton personnalisé sur l'écran principal.

7. Dispositif de commande à distance (1) selon la revendication 5 ou 6, dans lequel le contrôleur (11) amène l'image sur le bouton personnalisé et l'image sur le bouton de fonction correspondant de la pluralité de boutons de fonctions sur l'écran de menu à être modifiées, en lien l'une avec l'autre, conformément à une modification de l'état de réglage de la fonction correspondante de la pluralité de fonctions.

8. Dispositif de commande à distance (1) selon l'une quelconque des revendications 1 à 7, dans lequel ledit au moins un bouton personnalisé comprend une pluralité de boutons personnalisés.
